# EUROPEAN PATENT APPLICATION

(11) **EP 1 643 774 A2**
(43) Date of publication of application: **05.04.2006**
(21) Application number: 05106618.1
(22) Date of filing: 19.07.2005
(51) Int. Cl.: H04N 7/50, H04N 7/26

(54) **Adaptive deblocking of video data**

(30) Priority: 29.09.2004 JP 2004285322
(71) Applicant: KABUSHIKI KAISHA TOSHIBA, Tokyo 105-8001 (JP)
(72) Inventor: Onoda, Atsushi Toshiba Corporation Intellectual, Minato-ku 105-8001, Tokyo (JP); Nakagawa, Masaki Toshiba Corporation Intellectual, Minatu-ko 105-8001, Tokyo (JP)
(74) Representative: Henkel, Feiler & Hänzel

(57) **Abstract**

An image processing apparatus includes a video decoder (31) which subjects a stream signal to a decoding process based on an MPEG system, a de-blocking filter (32) which subjects a decoded image signal decoded by the video decoder to a de-block filtering process, and a holding unit (44a, 44b) which previously holds a block boundary threshold value used as a condition for deciding whether the de-blocking filter performs a de-block filtering process.

## Description

This invention relates to an image processing apparatus which decodes data encoded according to at least an MPEG (Moving Picture Expert Group) system. The image processing apparatus is an apparatus which becomes effective when a decoder which decodes data encoded in a encoding system of H.264 standard is additionally used.

An image processing apparatus which encodes and decodes voice or video data according to the MPEG system is disclosed in Jpn. Pat. Appln. KOKAI Publication No. 2003-244641. The data compression technology based on the MPEG system is frequently used in an information recording/reproducing apparatus, transmission/reception processing apparatus and the like.

In the MPEG system, image data is divided into small blocks (for example, eight pixels × eight pixels) and each block is subjected to the compression process. Therefore, there occurs a problem that the luminance and hue become different between adjacent blocks when they are reproduced, and so-called block distortion appears on a reproduced image. Particularly, when the blocks are encoded at a low bit rate, the block distortion appears.

In order to solve the above problem, an encoding/decoding method for suppressing the block distortion is considered. With this method, a portion between the blocks in which the block distortion occurs is previously specified at the image compression time. Then, information of a portion (image position) to be subjected to a filtering process is contained in control data (or management data) and transmitted on the decoder side. On the decoder side, the control data is analyzed, position information to be subjected to the filtering process is detected and a process of suppressing the block distortion is performed.

The above block distortion suppressing process is a process performed based on position information used to previously suppress the block distortion. However, the block distortion cannot be suppressed for a transmission signal of a form in which position information used to suppress the block distortion is not contained. That is, the block distortion suppressing process is not effective for a decoded output with respect to which the encoding/decoding method for suppressing the block distortion is not used.

According to one aspect of the present invention, there is provided an image processing apparatus which comprises a video decoder which subjects an input stream signal to a decoding process based on an MPEG system, a de-blocking filter which performs a de-block filtering process for a decoded image signal decoded by the video decoder, and a holding unit (44a, 44b) which previously holds a block boundary threshold value used as a condition for deciding whether the de-blocking filter performs a de-block filtering process.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a diagram for illustrating the configuration of an image processing apparatus according to one embodiment of this invention;
FIG. 2 is a flowchart for illustrating the operation of the apparatus according to the present embodiment;
FIGS. 3A to 3C are explanatory diagrams of macro blocks to be subjected to a de-block filtering process in this invention;
FIGS. 4A to 4C are explanatory diagrams showing operation examples of a de-blocking filter 32; and
FIG. 5 is a diagram showing the main portion of an apparatus according to another embodiment of this invention, for illustrating the embodiment.

There will now be described embodiments of this invention with reference to the accompanying drawings.

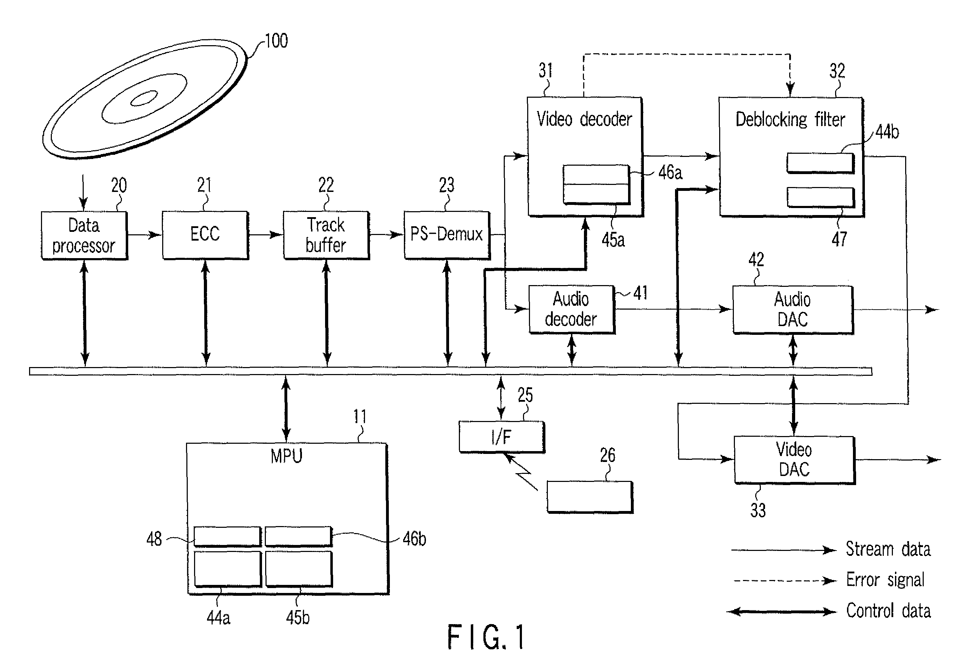

FIG. 1 is a disk reproducing apparatus or disk recording/reproducing apparatus to which this invention is applied. As a disk 100 used as an information recording medium, an optical disk (for example, DVD (Digital Versatile Disk)), magnetic disk (Hard Disk) or the like is provided. Further, only one disk is shown in the drawing, but an apparatus on which a hard disk and optical disk can be mounted may be used. Further, a semiconductor memory can be used in this portion.

A signal which is read out from the disk 100 based on the DVD standard, for example, is demodulated by a data processor 20 and the demodulated signal is subjected to an error correction process (ECC process) in an ECC circuit 21. The signal subjected to the error correction process is input to a track buffer 22. The track buffer 22 performs a data buffering process so as to prevent reproduced data from becoming discontinuous or prevent reproduced data from becoming excessive. An output of the track buffer 22 is input to a separating unit 23 which separates a packet stream (video basket, audio packet, sub-video packet, control data packet or the like).

The separated video packet is input to a video decoder 31 and decoded according to an MPEG system. The decoded output is supplied to a de-blocking filter 32.

The de-blocking filter 32 performs a de-block filtering process in a case where the difference of the average level between the adjacent blocks is equal to or larger than a threshold value, for example. The average level is obtained from pixel values in the block. When the difference of the average level of the adjacent blocks is smaller than the threshold value, it passes the output as it is without performing the filtering process.

The reproduced video data is converted into an analog signal in a digital-analog converter 33 and supplied to a monitor.

On the other hand, the separated audio packet is decoded in an audio decoder 41. For example, the audio signal is encoded according to the MPEG system, AC3 system or processed according to the PCM system in some cases. The decoder 41 which can cope with the above processing systems is prepared. An audio decoded output is converted into an analog audio signal in an analog-digital converter 42 and supplied to a speaker (not shown).

Each of the blocks (20 to 23, 31 to 33, 41, 42) is connected to a micro processing unit (which is hereinafter referred to as an MPU) 11 which configures a system controller via a bus line 51, and subjected to a timing control process or switching control process. Further, error detection information, error correction information and the like obtained when the ECC circuit 22 performs the error correction process are acquired by the MPU 11. Further, as swill be described later, the MPU 11 can control the function of the de-blocking filter 32. An operation signal from a remote controller 26 is supplied to the MPU 11 via an interface 25. The operation signal is analyzed by the MPU 11 which in turn performs a control process based on the result of analysis.

Various embodiments can be provided as an embodiment in which the de-blocking filter 32 performs the filtering function.

(Example 1): The filtering process is unconditionally performed. Alternatively, the user determines whether the filtering process is performed or not. When the filtering process is always performed, the threshold value of the block boundary used as a condition for deciding whether the de-blocking filter 32 performs the de-blocking filtering process. The threshold value is previously held as a representative value in a holding unit. The holding unit may be provided in the de-blocking filter 32 or MPU 11. That is, it is provided in the MPU 11 or de-blocking filter 32 as shown by a holding unit 44a or 44b.

(Example 2) In the video recorder 31 or MPU 11, since information of the resolution or bit rate of video data is acquired, the threshold value is set according to the resolution or bit rate. If the threshold value satisfies a preset condition, the filtering process is performed. Further, the threshold value may be adjusted via the MPU 11 from the exterior. That is, a resolution detector 45a or 45b is provided. Then, a threshold value setting unit 46a or 46b controls the threshold value according to the resolution.

(Example 3) In the video decoder 31, when it is detected that the average luminance levels are greatly different (larger than the threshold value) between adjacent blocks according to a decoded video signal, it is determined that block distortion occurs. In order to stably make the above determination, a portion corresponding to the edge of the image can be omitted. Based on the determination signal from the video decoder 31, the de-blocking filter 32 performs a filtering function in an area around an area containing the corresponding block.

(Example 4) In the video decoder 31, when it is detected that the average luminance levels are greatly different (larger then the threshold value) between pixels lying on the boundary of adjacent blocks according to a decoded video signal, it is determined that block distortion occurs. In order to stably make the above determination, a portion corresponding to the edge of the image can be omitted. Based on the determination signal from the video decoder 31, the de-blocking filter 32 performs a filtering function in an area around an area containing the corresponding block.

(Example 5) The video decoder process of the video decoder 31 and the block distortion reducing process in the de-blocking filter 32 are performed according to the control operation by an application contained in the MPU 11. Therefore, the MPU 11 can control the video decoder 31 and de-blocking filter 32.

In the case of Example 1 or 2, the above threshold value is not previously set to a preset value, but can be variously changed based on the control operation of the MPU 11. That is, it is possible to determine whether the block filtering process is performed or not based on the control operation of the MPU 11 or variously change the threshold value at which the block filtering process is performed. As the threshold variation condition, various embodiments can be provided.

(Example 6) The above threshold value setting process can be performed by the user. In this case, the MPU 11 receives an operation input by the remote controller 26 and the threshold value is variably changed in the video decoder 31.

(Example 7) Further, the MPU 11 controls the ECC circuit 21. In this case, whether data contains a large amount of errors or a small amount of errors can be determined according to the degree of error correction in the ECC circuit 21. When a large amount of errors exist and if the amount of errors is within the permissible range, the decoding process may be performed in some cases. Therefore, when a large amount of errors exist, the MPU 11 determines that the block distortion is large and may permit the filtering process in the de-blocking filter 32 to be performed. Determination of whether data contains a large amount of errors or a small amount of errors can be made by comparing the threshold value with the error measurement amount.

Alternatively, threshold values used to evaluate the luminance differences between the blocks of the video decoder 31 can be switched at plural stages without determining whether the filtering process is performed or not.

(Example 8) Further, it is possible to provide a switching circuit which selectively makes a switch between an operation for permitting a signal to pass through to the output side of the de-blocking filter or an operation for permitting a signal to be input to the de-blocking filter. Then, the quality of the input stream signal is evaluated and detected, and when it satisfies a preset condition, a switching circuit 47 is controlled to set the de-blocking filter into a through state. A quality detector 48 which detects the quality may be provided in the MPU 11 or video decoder 31. In addition, a block can be newly and separately provided.

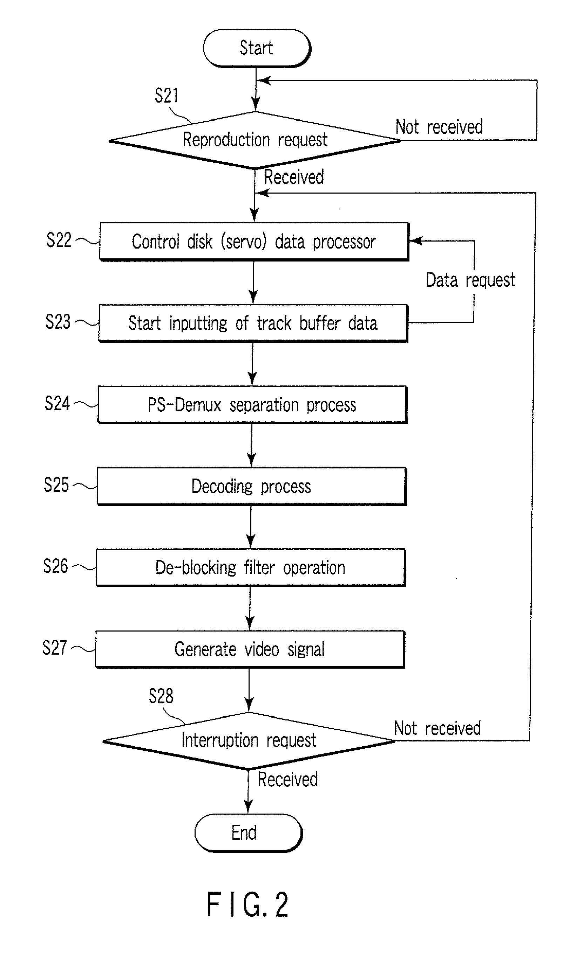

FIG. 2 is a flowchart for illustrating the operation of the apparatus shown in FIG. 1. When the reproducing operation is performed (step S21), data is read out to the data processor 20 via the optical head from the disk 100 (step S22). Data which is demodulated by the data processor 20 and subjected to the error correction process by the error correction (ECC) circuit 21 is input to the track buffer 22 (step S23). An output of the track buffer 22 is separated for each stream by the separating unit 23 (step S24) and a video pack is decoded by the decoder 31 (step S25), subjected to the filtering process in the blocking filter 32 (step S26) and subjected to the digital-analog conversion process and generated as a video signal (step S27).

The above operation is continuously performed until an interruption request is input (step S28).

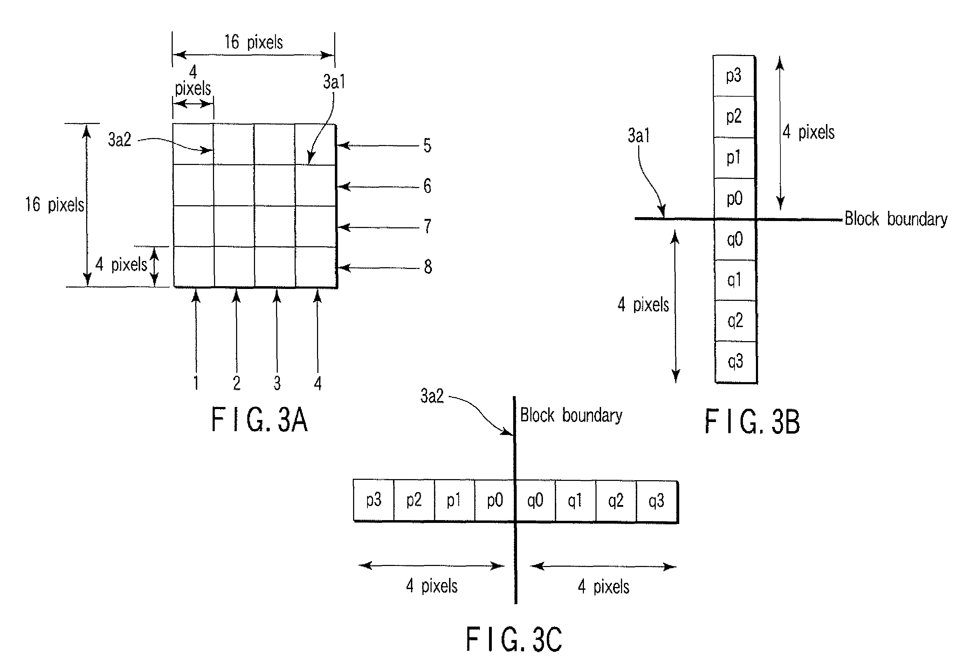

Next, the de-block filtering process is explained. FIG. 3A shows a macro block of 16 pixels × 16 pixels. FIG. 33 shows an extracted portion of the block boundary (boundary line 3a1) of vertically arranged pixels. FIG. 3C shows an extracted portion of the block boundary (boundary line 3a2) of laterally arranged pixels. In FIG. 3A, numerals of 1 to 8 indicate the order of de-block filtering steps performed. Therefore, in the apparatus, the de-block filtering process is not performed for the whole portion of one screen and the filtering process is partially performed only for a required portion.

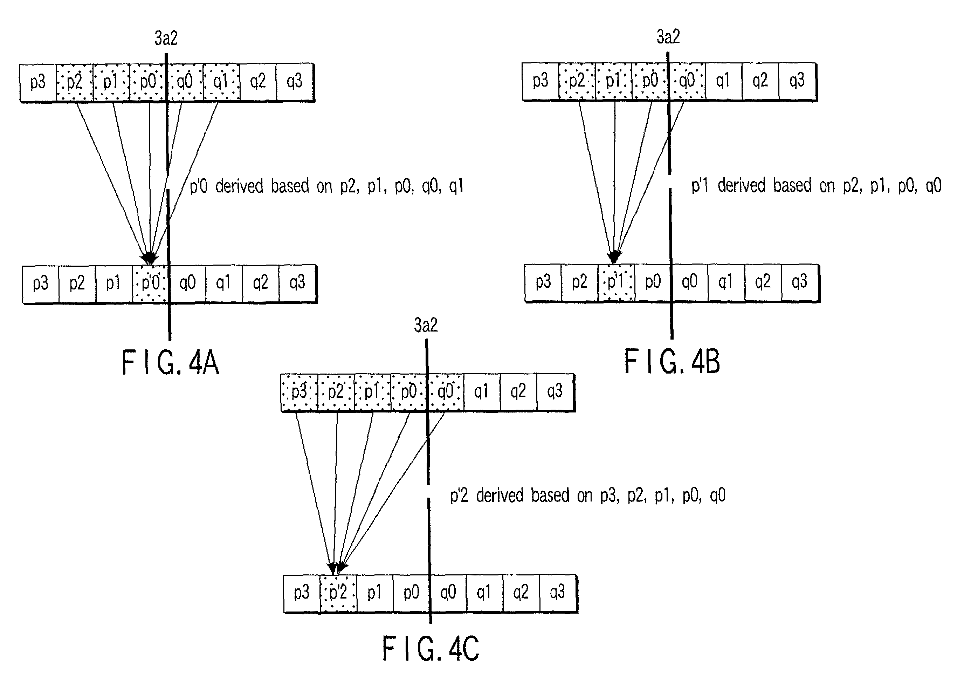

FIGS. 4A to 4C show examples of the pixel operation to perform the filtering process. That is, the example of FIG. 4A is an example of five pixels p2, p1, p0, q0, q1 used when a pixel p'0 (which is a pixel nearest to the block boundary) after filtering is obtained.

The example of FIG. 4B is an example of four pixels p2, p1, p0, q0 used when a pixel p'1 after filtering is obtained. The example of FIG. 4C is an example of five pixels p3, p2, p1, p0, q0 used when a pixel p'2 after filtering is obtained.

As described above, in order to make the block boundary non-prominent, the filtering process using the adjacent blocks is performed. In FIG. 4, a case relating to the boundary between the right and left blocks is explained, but the filtering process can be performed with respect to the boundary between the upper and lower blocks. The coefficients of the pixels used for filtering can be variously set. The coefficients can be previously stored in a table and freely used according to the distance from the boundary.

Further, in the above explanation, the luminance signal is explained. However, it is of course possible to perform the process which reduces the block distortion for a color signal in the same manner.

In the above explanation, the de-blocking filter 32 is independently shown, but a de-blocking filter which conforms to the H.264 system can be used.

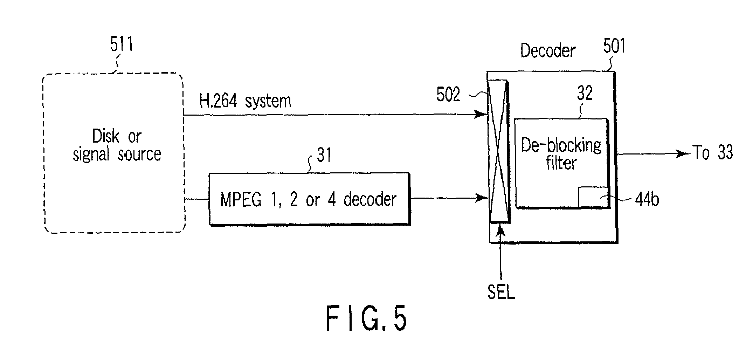

That is, as shown in FIG. 5, a decoder 501 which conforms to the H.264 system is used for a video signal corresponding to the H.264 system and a de-blocking filter 32 is contained in the decoder 501. To the decoder 501, a signal of the H.264 system from a disk or signal source 511 can be supplied or a decoded signal from the video decoder (using MPEG1, MPEG2 or MPEG4) 31 shown in FIG. 1 can be supplied. One of the above signals is fetched by the decoder 501 via a selector 502.

The selector 502 permits one of the signals to be fetched into the decoder 501 according to a selection signal from the MPU 11. Alternatively, the selector 502 may be configured to detect the presence of an input signal and automatically fetch the signal.

Since the signal of the H.264 system itself contains control data for de-block filtering, the decoder 501 performs the de-block filtering process according to control data. However, an output signal processed by the decoder (video decoder) 31 corresponding to the MPG system does not contain a signal used to control de-block filtering. Therefore, in this case, as explained in Example 1 to Example 7, the de-block filtering process is performed.

In the above apparatus, the decoder 501 shown in FIG. 5 may be configured in an IC form or the block of the whole portion of the apparatus can be configured in an LSI form.

This invention is not limited to the above embodiments as they are and can be embodied by variously modifying the constituents without departing from the technical scope thereof at the embodying stage. Further, various inventions can be formed by adequately combining a plurality of constituents disclosed in the above embodiments. For example, some constituents can be omitted from all of the constituents disclosed in the embodiments. Further, the constituents disclosed in the different embodiments can be adequately combined.

## Claims

1. An image processing apparatus **characterized by** comprising:
a video decoder (31) subjecting an input stream signal decoding based on an MPEG system,
a de-blocking filter (32) de-block filtering a decoded image signal decoded by the video decoder, and
a holding unit previously holding a block boundary threshold value used as a condition that the de-blocking filter performs a de-block filtering process as a representative value.

2. The image processing apparatus according to claim 1, **characterized in that** the de-blocking filter (32) includes a selector (502) contained in a decoder of an H.264 standard to fetch a video signal of the H.264 standard.

3. The image processing apparatus according to claim 1, **characterized by** further comprising an error detecting circuit (21) which detects an error of the input stream signal input to the video decoder, and a controller (11) which makes the threshold value smaller when the error detecting circuit performs an error detection process and an amount of errors detected is not smaller than a preset amount.

4. The image processing apparatus according to claim 1, **characterized by** further comprising a resolution detector (45a, 45b) which detects one of a resolution and bit rate of the decoded image signal, and a threshold value setting unit (46a, 46b) which controls the threshold value to a smaller value when one of the resolution and bit rate detected by the resolution detector is lower than a preset value.

5. The image processing apparatus according to claim 1, **characterized by** further comprising a switching circuit (47) which makes a switch between an operation of permitting an input signal to pass through to an output side of the de-blocking filter and an operation of permitting the input signal to be input to the de-blocking filter, and a quality detector (48) which detects a quality of the input stream signal and controls the switching circuit to set the de-blocking filter into a through state when the detected quality satisfies a preset condition.

6. The image processing apparatus according to claim 1, **characterized in that** the threshold value is freely and variably adjusted from an exterior.

7. The image processing apparatus according to claim 3, **characterized in that** the threshold value is freely and variably adjusted from an exterior.

8. The image processing apparatus according to claim 4, **characterized in that** the threshold value is freely and variably adjusted from an exterior.

9. The image processing apparatus according to claim 5, **characterized in that** the threshold value is freely and variably adjusted from an exterior.

10. An image processing method **characterized by** comprising:
subjecting an input stream signal to a decoding process based on an MPEG system by use of a video decoder (31),
previously holding a threshold value in a holding unit (44a, 44b), and
using the threshold value as a condition for execution of a de-block filtering process when the decoded image signal is subjected to the de-block filtering process by use of a de-blacking filter (32).

11. The image processing method according to claim 10, **characterized by** further comprising performing an error detection process for the input stream signal input to the video decoder (31) by use of an error detecting circuit (21), and making small the threshold value when an amount of errors is not smaller than a preset amount.

12. The image processing method according to claim 10, **characterized by** further comprising detecting one of a resolution and bit rate of the decoded image signal by use of a resolution detector (45a, 45b), and controlling the threshold value to a smaller value by use of a threshold setting unit (46a, 46b) when the detected one of the resolution and bit rate is lower than a preset value.

13. The image processing method according to claim 10, **characterized by** further comprising making a switch between an operation of permitting an input signal to pass through to an output side of the de-blocking filter and an operation of permitting the input signal to be input to the de-blocking filter, and detecting quality of the input stream signal and controlling the switching circuit to set the de-blocking filter into a through state by use of a quality detector (48) when the detected quality satisfies a preset condition.
